# FASCICULE DE BREVET EUROPEEN

(11) **EP 3 573 568 B1**
(45) Date de publication et mention de la délivrance du brevet: **06.01.2021**
(21) Numéro de dépôt: 18702819.6
(22) Date de dépôt: 23.01.2018
(51) Int. Cl.: A61C 8/00

(54) **ENSEMBLE DE COMPOSANTS POUR LA RESTAURATION PROTHETIQUE DENTAIRE**
KOMPONENTENSATZ FÜR DIE ZAHNÄRZTLICHE ZAHNRESTAURATION
SET OF COMPONENTS FOR DENTAL PROSTHETIC RESTORATION

(30) Priorité: 26.01.2017 FR 1750654
(43) Date de publication de la demande: 04.12.2019
(73) Titulaire: ANTHOGYR, 74700 Sallanches (FR)
(72) Inventeur: RICHARD, Hervé, 73590 Notre Dame de Bellecombe (FR)
(74) Mandataire: Cabinet Poncet
(86) Numéro de dépôt international: PCT/IB2018/050398
(87) Numéro de publication internationale: WO 2018/138630

(56) Documents cités:
- EP-A1- 2 127 612
- WO-A2-2011/036268
- DE-U1-202008 003 960
- US-A1- 2011 123 949
- US-A1- 2015 140 508

## Description

### DOMAINE TECHNIQUE DE L'INVENTION

La présente invention concerne le domaine de la restauration prothétique dentaire, et concerne plus particulièrement un implant dentaire en céramique.

On connaît des implants dentaires en matériau métallique tels que du titane ou un alliage de titane, destinés à être installés dans l'os maxillaire ou mandibulaire d'un patient, s'étendant selon un premier axe longitudinal entre une extrémité proximale et une extrémité distale, à logement intérieur de connexion s'étendant depuis l'extrémité distale et en direction de l'extrémité proximale.

Le logement intérieur de connexion est généralement fileté intérieurement sur une partie de sa longueur pour recevoir par vissage une vis de fixation destinée à assurer la fixation définitive d'un composant dentaire tel qu'un pilier ou une âme de prothèse transfixée comportant une forme extérieure sensiblement en forme de dent. De façon standard, la vis de fixation présente un filetage extérieur à profil métrique.

Si la réalisation d'un filetage intérieur dans le logement intérieur de connexion d'un implant dentaire métallique ne pose pas trop de problème, il en est tout autrement dans le cas particulier d'un implant dentaire en céramique.

L'usinage de la céramique est en effet extrêmement long du fait de sa dureté élevée. En outre, la forme de filet doit être modifiée par rapport à un filetage standard (métrique) pour limiter les concentrations de contraintes qui résulteraient d'un usinage à rayons très faibles, notamment à fond de filet (risques d'amorce de fissures). Le rayon pour un filetage à profil métrique est en effet très petit au regard du pas. Un filet adapté à la céramique nécessite ainsi un pas plus important, ce qui augmente les risques de dévissage fortuit de la vis de fixation, et est en outre plus encombrant radialement.

Le document WO 2011/036268 A2 décrit le préambule de la revendication 1.

### EXPOSE DE L'INVENTION

Un problème proposé par la présente invention est de faciliter la fabrication d'un implant dentaire en céramique, en réduisant les risques d'affaiblissement de celui-ci et les risques de dévissage d'une vis de fixation.

Pour atteindre ces objets ainsi que d'autres, l'invention propose un ensemble de composants pour la restauration prothétique dentaire, comprenant un implant dentaire en céramique destiné à être installé dans l'os maxillaire ou mandibulaire d'un patient, s'étendant selon un premier axe longitudinal entre une extrémité proximale et une extrémité distale, à logement intérieur de connexion s'étendant depuis l'extrémité distale et en direction de l'extrémité proximale ; selon l'invention :
- le logement intérieur de connexion comporte au moins un tronçon à section transversale non circulaire,
- l'ensemble comprend un insert fileté intérieurement, conformé de façon à être rapporté dans le tronçon à section transversale non circulaire du logement intérieur de connexion de l'implant dentaire en y étant indexé en rotation autour du premier axe longitudinal,
- l'ensemble comprend une pièce de fixation à premier passage traversant axial présentant une section transversale de dimensions suffisantes pour le passage d'un élément fileté destiné à coopérer par vissage avec l'insert fileté intérieurement, conformée pour s'engager dans un logement radial ménagé dans la paroi latérale du logement intérieur de connexion de l'implant dentaire de façon à former une butée axiale s'opposant à une extraction de l'insert fileté intérieurement hors du tronçon à section transversale non circulaire du logement intérieur de connexion.

On peut ainsi réaliser, dans l'implant en céramique, un logement intérieur de connexion ayant une paroi latérale dépourvue de filetage intérieur, le filetage (de préférence métrique) pour une vis de fixation étant procuré par l'insert fileté intérieurement qui est indexé en rotation et retenu dans le logement intérieur de connexion. L'implant présente ainsi des risques réduits d'amorces de rupture.

En fonction de la position de l'implant dentaire fixé dans la mâchoire du patient, il est souvent nécessaire de régler avec soin l'emplacement de l'émergence coronaire du puits permettant un accès à la vis de fixation dans l'âme de prothèse dentaire transfixée en céramique. Il s'agit en effet d'être en mesure, malgré le peu de place disponible dans la bouche du patient, d'accéder à la vis de fixation avec un outil de vissage. Il est en outre important que l'émergence coronaire du puits d'accès soit disposée à l'écart des parties actives de la dent lors de la mastication (par exemple les cuspides).

Pour remédier à cela, on prévoit que l'ensemble comporte en outre une âme de prothèse dentaire transfixée en céramique comprenant un deuxième passage traversant constitué par des premier et deuxième tronçons de passage successifs, ledit premier tronçon de passage s'étendant depuis une extrémité proximale de l'âme de prothèse dentaire transfixée selon un deuxième axe longitudinal, et ledit deuxième tronçon de passage prolongeant le premier tronçon de passage de telle sorte que les premier et deuxième tronçons de passage forment un angle non nul entre eux.

L'âme de prothèse dentaire transfixée en céramique (usinée à partir d'un bloc de céramique ou produite par frittage d'une poudre céramique notamment) est éventuellement revêtue par le prothésiste d'une ou plusieurs couches très légères de texturation ou de coloration procurant un aspect le plus proche d'une dent naturelle. En combinaison avec l'implant dentaire en céramique, l'âme de prothèse dentaire transfixée en céramique forme un ensemble procurant un aspect visuel très proche de celui d'une dent réelle, sans partie métallique susceptible d'induire des teintes non naturelles.

Le caractère angulé du deuxième passage traversant permet que l'émergence coronaire du puits d'accès soit disposée à l'écart des parties actives de la dent lors de la mastication (cuspides).

Un deuxième passage traversant angulé autorisant une insertion et un cheminement de la vis de fixation selon une trajectoire courbe à travers l'âme de prothèse dentaire transfixée en céramique nécessite toutefois un enlèvement de matière assez important dans l'âme de la prothèse, ce qui affaiblit grandement sa résistance mécanique.

Par ailleurs, il faut que le praticien dispose dans un premier temps l'âme de prothèse dentaire transfixée en céramique sur l'implant dentaire en bouche du patient, avant d'insérer dans un deuxième temps la vis de fixation à travers l'âme de prothèse dentaire transfixée en céramique, puis de procéder à son vissage dans un troisième temps. Il y a ainsi de forts risques de perte et/ou d'avalement accidentel par le patient de l'âme de prothèse dentaire transfixée en céramique et/ou de la vis de fixation.

Pour remédier à cela, on prévoit que :
- l'ensemble comprend une vis de fixation comportant une tête de vis depuis laquelle s'étend une tige de vis munie d'un tronçon fileté destiné à être reçu par vissage dans ledit insert fileté intérieurement,
- la pièce de fixation s'étend entre une première extrémité, destinée à s'engager dans le logement intérieur de connexion de l'implant dentaire, et une deuxième extrémité,
- le premier tronçon de passage de l'âme de prothèse dentaire transfixée comporte des dimensions transversales permettant la réception de la deuxième extrémité de la pièce de fixation et de la tête de vis par pénétration axiale selon le deuxième axe longitudinal depuis l'extrémité proximale de l'âme de prothèse dentaire transfixée,
- la tête de vis et la deuxième extrémité de la pièce de fixation sont conformées de façon à coopérer pour retenir l'âme de prothèse dentaire transfixée sur l'implant dentaire, par expansion radiale de la deuxième extrémité de la pièce de fixation.

La vis de fixation n'a ainsi pas besoin de cheminer à travers le deuxième tronçon de passage du deuxième passage traversant angulé, qui peut donc avoir des dimensions plus réduites pour limiter les risques d'un affaiblissement de l'âme de prothèse dentaire transfixée.

Lors de ses manipulations, le praticien engage dans un premier temps par vissage la vis de fixation dans l'insert fileté intérieurement qui est déjà retenu dans le logement intérieur de connexion par la pièce de fixation. Puis, dans un deuxième temps, il engage l'âme de prothèse dentaire transfixée sur la deuxième extrémité de la pièce de fixation et la tête de vis. L'âme de prothèse dentaire transfixée est alors retenue provisoirement sur l'implant par son emmanchement sur la deuxième extrémité de la pièce de fixation et la tête de vis. Enfin, le praticien achève de fixer l'âme de prothèse dentaire transfixée en vissant la vis de fixation dans un troisième temps. Lors de ces manipulations, les risques de perte et/ou d'avalement de l'âme de prothèse dentaire transfixée en céramique et/ou de la vis de fixation sont réduits, car il est réalisé à chaque étape un sous-ensemble à éléments solidarisés entre eux au moins de façon précaire.

Avantageusement, le deuxième tronçon de passage de l'âme de prothèse dentaire peut comporter des dimensions transversales inférieures à celles du premier tronçon de passage, mais suffisantes pour le passage d'un outil permettant d'entraîner en rotation la vis de fixation selon le premier axe longitudinal.

Le déplacement relatif en translation de la vis de fixation vers l'extrémité proximale de l'implant dentaire selon le premier axe longitudinal provoque une expansion radiale de la deuxième extrémité de la pièce de fixation.

Cette expansion radiale procure une fixation simple et satisfaisante de l'âme de prothèse dentaire transfixée sur l'implant dentaire.

Pour améliorer encore cette fixation, l'âme de prothèse dentaire peut comporter une gorge annulaire destinée à recevoir la deuxième extrémité de la pièce de fixation.

Selon une première possibilité, un déplacement relatif en translation de la vis de fixation vers l'extrémité proximale de l'implant dentaire selon le premier axe longitudinal peut provoquer une expansion radiale de la deuxième extrémité de la pièce de fixation pour engager la deuxième extrémité de la pièce de fixation dans la gorge annulaire.

Selon une deuxième possibilité, lorsque le premier tronçon de passage reçoit la deuxième extrémité de la pièce de fixation et la tête de vis par pénétration axiale selon le premier axe longitudinal, la deuxième extrémité de la pièce de fixation peut s'engager dans la gorge annulaire de façon réversible, de préférence par encliquetage.

Dans le cadre de la deuxième possibilité, après réception de la deuxième extrémité de la pièce de fixation dans la gorge annulaire, la tête de vis peut venir axialement en appui contre la deuxième extrémité de la pièce de fixation et s'opposer à une extraction de la deuxième extrémité de la pièce de fixation hors de la gorge annulaire. On empêche ainsi de façon simple et efficace toute séparation de l'âme de prothèse dentaire transfixée et de l'implant dentaire.

On peut prévoir en alternative dans le cadre de la deuxième possibilité que, après réception de la deuxième extrémité de la pièce de fixation dans la gorge annulaire, un déplacement relatif en translation de la vis de fixation vers l'extrémité proximale de l'implant dentaire selon le premier axe longitudinal provoque une expansion radiale de la deuxième extrémité de la pièce de fixation.

L'encliquetage, obtenu lorsque le premier tronçon de passage reçoit la deuxième extrémité de la pièce de fixation et la tête de vis par pénétration axiale selon le premier axe longitudinal, n'a ainsi pas besoin d'être trop fort, de façon à permettre au praticien un retrait et un repositionnement sans trop d'efforts. L'âme de prothèse dentaire transfixée pourra néanmoins être fixée sur l'implant dentaire de façon fiable par l'expansion radiale ultérieure de la deuxième extrémité de la pièce de fixation provoquée par le vissage de la vis de fixation.

Avantageusement, la gorge annulaire et/ou la deuxième extrémité de la pièce de fixation peuvent comporter des surfaces de contact respectives conformées de façon que l'expansion radiale de la deuxième extrémité de la pièce de fixation induise selon le premier axe longitudinal un pressage de l'extrémité proximale de l'âme de prothèse dentaire vers l'extrémité distale de l'implant dentaire.

Un tel pressage axial permet de limiter efficacement les risques que s'insèrent et se développent des bactéries aux interfaces entre l'âme de prothèse dentaire transfixée et l'implant dentaire (et les éventuels composants intermédiaires).

De préférence, on peut prévoir que :
- la première extrémité de la pièce de fixation comporte un premier ensemble d'ailettes longitudinales à parties distales libres,
- la deuxième extrémité de la pièce de fixation comporte un deuxième ensemble d'ailettes longitudinales à parties distales libres,
- les premier et deuxième ensembles d'ailettes longitudinales sont définis par une pluralité de fentes longitudinales s'étendant sur une partie seulement de la longueur de la pièce de fixation et prenant naissance de façon alternée depuis la première extrémité et depuis la deuxième extrémité, lesdites fentes s'étendant toutes le long d'un même tronçon axial intermédiaire de la pièce de fixation.

Une telle pièce de fixation permet un encliquetage à chacune de ses extrémités. Pour obtenir un encliquetage aisé, il est toutefois nécessaire que les ailettes présentent une longueur suffisante pour faciliter leur fléchissement : cela mène à une augmentation de l'encombrement axial de la pièce de fixation, et cet encombrement est alors peu compatible avec le domaine dentaire où la place est comptée. Le fait de prévoir des fentes définissant les premier et deuxième ensembles d'ailettes longitudinales venant en correspondance d'un même tronçon axial intermédiaire de la pièce de fixation permet de réduire sensiblement l'encombrement axial de la pièce de fixation tout en procurant des encliquetages aisés et efficaces.

Selon une première possibilité, la première extrémité de la pièce de fixation peut être reçue dans le logement radial de façon irréversible, de préférence par encliquetage. Les risques de séparation intempestive de la pièce de fixation et de l'implant dentaire sont ainsi réduits.

Selon une deuxième possibilité, la première extrémité de la pièce de fixation peut être reçue dans le logement radial de façon réversible, de préférence par encliquetage. La pièce de fixation peut alors être ultérieurement extraite de l'implant dentaire en cas de besoin.

Dans le cadre de cette deuxième possibilité, la première extrémité de la pièce de fixation et l'insert fileté intérieurement peuvent être conformés de façon que, lorsque l'insert fileté intérieurement est en appui axialement contre la première extrémité de la pièce de fixation, cet appui s'oppose à un retrait de la première extrémité de la pièce de fixation hors du logement radial. On rend ainsi inséparables la pièce de fixation et l'implant dentaire de façon simple à l'aide de la vis de fixation.

En alternative, toujours dans le cadre de la deuxième possibilité un déplacement relatif en translation de l'insert fileté intérieurement vers l'extrémité distale de l'implant dentaire selon le premier axe longitudinal peut provoquer une expansion radiale de la première extrémité de la pièce de fixation.

De préférence, l'âme de prothèse dentaire comprend une extrémité proximale conformée pour venir porter directement en appui contre l'extrémité distale de l'implant dentaire. On limite ainsi le nombre de composants, et on obtient un contact céramique sur céramique évitant des phénomènes d'usure prématurée.

Avantageusement, l'ensemble peut comporter des moyens d'indexation en rotation de l'âme de prothèse dentaire et de l'implant dentaire autour du premier axe longitudinal.

Selon une première possibilité, l'âme de prothèse dentaire peut comporter une forme extérieure sensiblement en forme de dent obtenue de préférence par usinage d'un bloc de céramique ou produite par frittage d'une poudre céramique. Une telle âme de prothèse dentaire peut éventuellement être revêtue par le prothésiste d'une ou plusieurs couches très légères de texturation ou de coloration, procurant un aspect le plus proche d'une dent naturelle.

Selon une autre possibilité, l'âme de prothèse dentaire peut être un bloc de céramique de forme extérieure sensiblement cylindrique ou prismatique et destiné à être usiné pour obtenir une forme extérieure sensiblement en forme de dent (comme par exemple illustré dans les documents KR 10-2013-0097820, US 2012/0251979 et EP 2 837 357).

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue en coupe longitudinale d'un implant en céramique faisant partie d'un premier mode de réalisation d'ensemble selon la présente invention ;
- la figure 2 est une vue en perspective d'un insert fileté intérieurement faisant partie du premier mode de réalisation d'ensemble selon la présente invention ;
- la figure 3 est une vue en coupe transversale de l'implant en céramique de la figure 1 dans lequel est logé l'insert fileté intérieurement de la figure 2 ;
- la figure 4 est une vue en perspective d'une pièce de fixation faisant partie du premier mode de réalisation d'ensemble selon la présente invention ;
- la figure 5 est une vue de côté de la pièce de fixation de la figure 4 ;
- la figure 6 est une vue en coupe longitudinale du premier mode de réalisation d'ensemble selon la présente invention ;
- la figure 7 est une vue en coupe longitudinale du premier mode de réalisation d'ensemble selon la présente invention et d'une âme de prothèse dentaire transfixée destinée à être rapportée et fixée sur l'ensemble ;
- la figure 8 est une vue en coupe longitudinale du premier mode de réalisation d'ensemble selon la présente invention sur lequel est rapportée et fixée une âme de prothèse dentaire transfixée ; et
- la figure 9 est une vue de détail en coupe longitudinale d'un deuxième mode de réalisation d'ensemble selon la présente invention.

### DESCRIPTION DES MODES DE REALISATION PREFERES

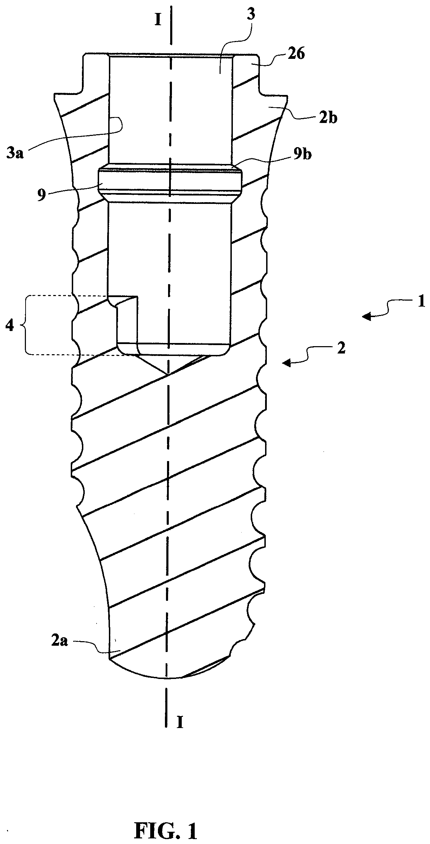

Sur les figures 1 à 7 est illustré un premier mode de réalisation d'ensemble 1 selon la présente invention.

Cet ensemble 1 comporte en premier lieu un implant dentaire 2 en céramique, tel qu'illustré sur la figure 1, destiné à être installé dans l'os maxillaire ou mandibulaire d'un patient. Celui-ci s'étend selon un premier axe longitudinal I-I entre une extrémité proximale 2a et une extrémité distale 2b, à logement intérieur de connexion 3 s'étendant depuis l'extrémité distale 2b et en direction de l'extrémité proximale 2a.

Le logement intérieur de connexion 3 comporte au moins un tronçon 4 à section transversale non circulaire.

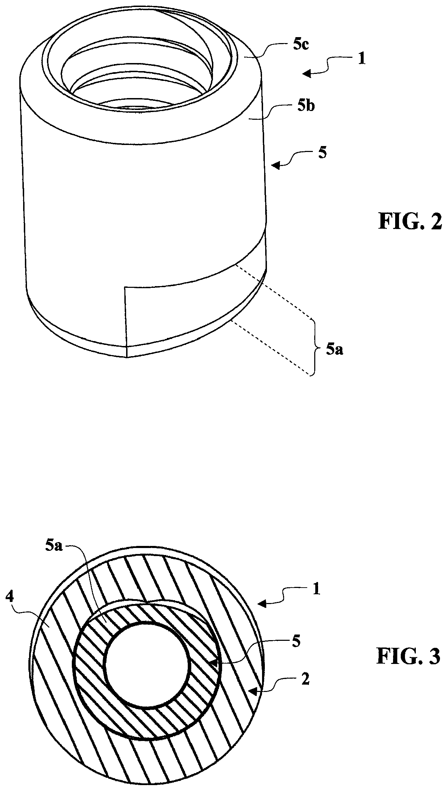

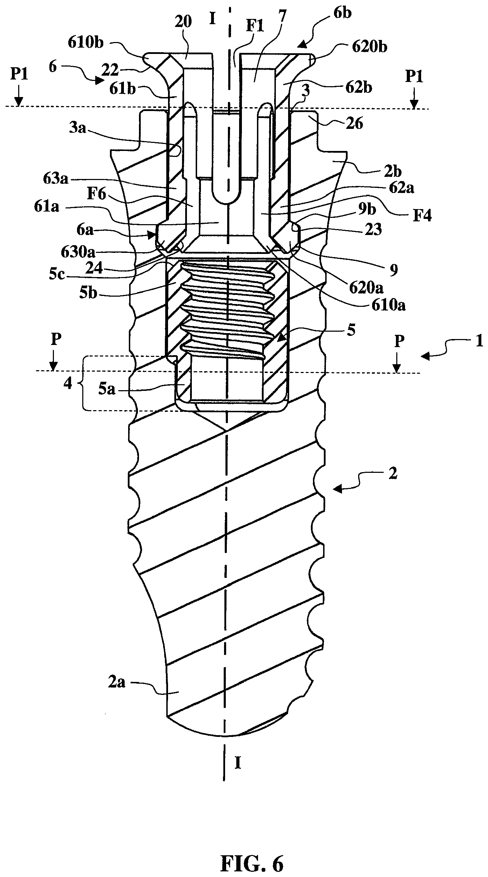

L'ensemble 1 comprend en deuxième lieu un insert fileté intérieurement 5, tel qu'illustré sur la figure 2, conformé de façon à être rapporté dans le tronçon 4 à section transversale non circulaire du logement intérieur de connexion 3 de l'implant dentaire 2 (voir figure 6) en y étant indexé en rotation autour du premier axe longitudinal I-I. De façon plus précise, l'insert fileté intérieurement 5 comporte un tronçon proximal 5a à section transversale non circulaire.

La forme de la section transversale du tronçon proximal 5a s'inscrit dans la forme de la section transversale non circulaire du tronçon 4 de l'implant dentaire 2 de façon à coopérer pour indexer en rotation l'insert fileté intérieurement 5 autour du premier axe longitudinal I-I dans le logement intérieur de connexion 3 de l'implant dentaire 2. Les formes du tronçon 4 à section transversale non circulaire et du tronçon proximal 5a sont plus particulièrement visibles sur la figure 3 qui est une coupe de l'implant 2 et de l'insert fileté intérieurement 5 selon le plan transversal P indiqué sur la figure 6.

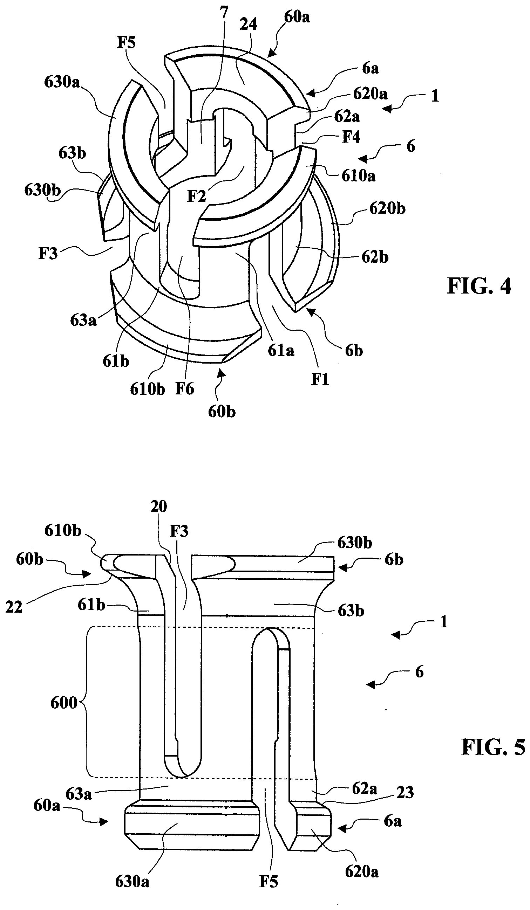

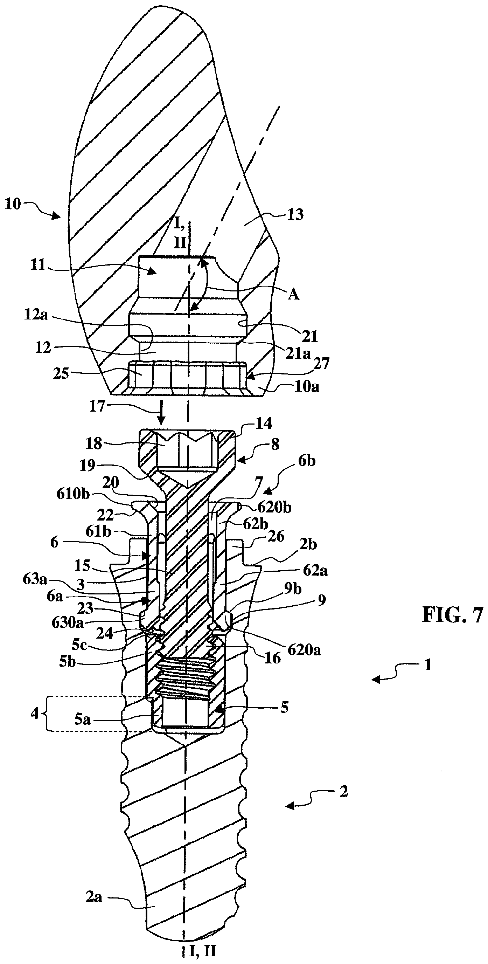

L'ensemble 1 comprend en troisième lieu une pièce de fixation 6, plus particulièrement visible sur les figures 4 et 5, à premier passage traversant axial 7 présentant une section transversale de dimensions suffisantes pour le passage d'un élément fileté 8 (voir figure 7) destiné à coopérer par vissage avec l'insert fileté intérieurement 5. La pièce de fixation 6 est conformée pour s'engager dans un logement radial 9 ménagé dans la paroi latérale 3a du logement intérieur de connexion 3 de l'implant dentaire 2 de façon à former une butée axiale s'opposant à une extraction de l'insert fileté intérieurement 5 hors du tronçon 4 à section transversale non circulaire du logement intérieur de connexion 3.

La pièce de fixation 6 s'étend entre une première extrémité 6a, destinée à s'engager dans le logement intérieur de connexion 3 de l'implant dentaire 2, et une deuxième extrémité 6b.

La première extrémité 6a de la pièce de fixation 6 comporte un premier ensemble 60a d'ailettes longitudinales 61a à 63a à parties distales libres 610a à 630a. La deuxième extrémité 6b de la pièce de fixation 6 comporte un deuxième ensemble 60b d'ailettes longitudinales 61b à 63b à parties distales libres 610b à 630b.

Les premier 60a et deuxième 60b ensembles d'ailettes longitudinales 61a à 63a et 61b à 63b sont définis par une pluralité de fentes longitudinales F1 à F6 s'étendant sur une partie seulement de la longueur de la pièce de fixation 6 et prenant naissance de façon alternée depuis la première extrémité 6a et depuis la deuxième extrémité 6b, lesdites fentes F1 à F6 s'étendant toutes le long d'un même tronçon axial intermédiaire 600 de la pièce de fixation 6 (figure 5).

L'ensemble 1 comporte en outre une âme de prothèse dentaire 10 transfixée en céramique telle qu'illustrée sur la figure 7. Cette âme de prothèse dentaire 10 comporte une forme extérieure sensiblement en forme de dent obtenue de préférence par usinage d'un bloc de céramique ou produite par frittage d'une poudre céramique.

L'âme de prothèse dentaire 10 comprend un deuxième passage traversant 11 constitué par des premier 12 et deuxième 13 tronçons de passage successifs, ledit premier tronçon de passage 12 s'étendant depuis une extrémité proximale 10a de l'âme de prothèse dentaire 10 transfixée selon un deuxième axe longitudinal II-II, et ledit deuxième tronçon de passage 13 prolongeant le premier tronçon de passage 12 de telle sorte que les premier 12 et deuxième 13 tronçons de passage forment un angle A non nul entre eux.

Sur la figure 7, on voit que l'ensemble 1 comprend en outre une vis de fixation 8 comportant une tête de vis 14 depuis laquelle s'étend une tige de vis 15 munie d'un tronçon fileté 16 destiné à être reçu par vissage dans ledit insert fileté intérieurement 5.

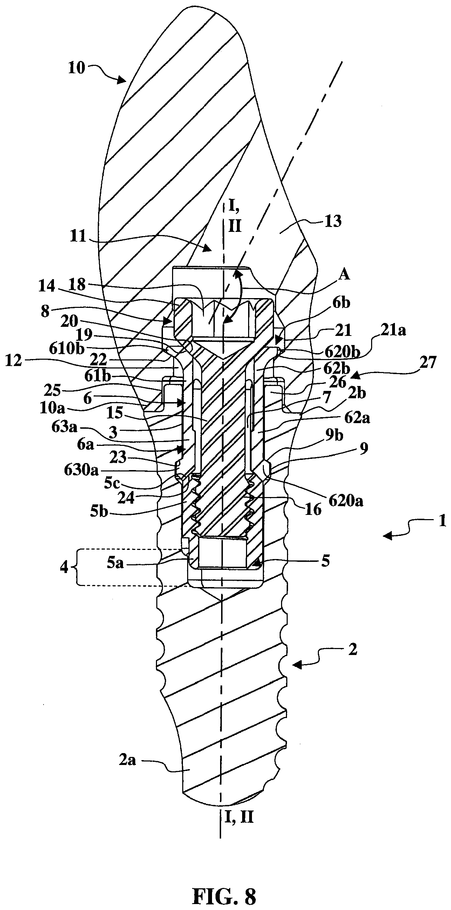

Le premier tronçon de passage 12 dans l'âme de prothèse dentaire 10 transfixée comporte des dimensions transversales permettant la réception de la deuxième extrémité 6b de la pièce de fixation 6 et de la tête de vis 14 par pénétration axiale selon le deuxième axe longitudinal II-II (selon un mouvement de translation illustré par la flèche 17) depuis l'extrémité proximale 10a de l'âme de prothèse dentaire 10 transfixée. La tête de vis 14 et la deuxième extrémité 6b de la pièce de fixation 6 sont conformées de façon à coopérer pour retenir l'âme de prothèse dentaire 10 transfixée sur l'implant dentaire 2 (configuration illustrée sur la figure 8).

Le deuxième tronçon de passage 13 dans l'âme de prothèse dentaire 10 comporte des dimensions transversales inférieures à celles du premier tronçon de passage 12, mais suffisantes pour le passage d'un outil permettant d'entraîner en rotation la vis de fixation 8 selon le premier axe longitudinal I-I.

Ici, la tête de vis 14 présente une empreinte de vissage 18 creuse à section transversale non circulaire (ici hexagonale) de dimensions inférieures aux dimensions hors-tout de la tête de vis 14. Pour entraîner la vis de fixation 8, on peut par exemple avoir recours à l'utilisation d'un outil permettant une angulation avec la tête de vis 14 lors d'un vissage ou dévissage, comme décrit par exemple dans le document EP 2 607 722.

Sur la figure 7, on observe que la tête de vis 14 présente une face inférieure 19 tronconique. Toute autre forme de la face inférieure 19 procurant un évasement progressif de la section transversale de la tête de vis 14 est envisageable. De la sorte, un déplacement relatif en translation de la vis de fixation 8 vers l'extrémité proximale 2a de l'implant dentaire 2 selon le premier axe longitudinal I-I provoque une expansion radiale de la deuxième extrémité 6b de la pièce de fixation 6.

On relève que la deuxième extrémité 6b de la pièce de fixation 6 comporte un siège 20 sensiblement tronconique et sensiblement complémentaire de la face inférieure 19 tronconique. Cette complémentarité permet de répartir les contraintes par un contact surfacique entre la tête de vis 14 et la deuxième extrémité 6b.

De façon plus particulière ici, l'expansion radiale de la deuxième extrémité 6b de la pièce de fixation 6 permet de faire pénétrer ou de mieux faire pénétrer la deuxième extrémité 6b (les parties distales libres 610b à 630b des ailettes longitudinales 61b à 63b) de la pièce de fixation 6 dans une gorge annulaire 21 ménagée dans le premier tronçon de passage 12 de l'âme de prothèse dentaire 10.

En alternative, si le premier tronçon de passage 12 de l'âme de prothèse dentaire 10 est dépourvu de gorge annulaire 21, l'expansion radiale de la deuxième extrémité 6b de la pièce de fixation 6 permet d'amener et presser les parties distales libres 610b à 630b des ailettes longitudinales 61b à 63b en appui contre la paroi latérale 12a du premier tronçon de passage 12.

Dans le mode de réalisation illustré sur les figures 1 à 8, lorsque le premier tronçon de passage 12 reçoit la deuxième extrémité 6b de la pièce de fixation 6 et la tête de vis 14 par pénétration axiale selon le premier axe longitudinal I-I, la deuxième extrémité 6b de la pièce de fixation 6 s'engage dans la gorge annulaire 21 de façon réversible par encliquetage. Cet encliquetage permet une fixation précaire, mais satisfaisante, de l'âme de prothèse dentaire 10 sur l'implant dentaire 2 avant que le praticien ne serre la vis de fixation 8.

Pour fixer l'âme de prothèse dentaire 10 sur l'implant dentaire 2, après réception de la deuxième extrémité 6b de la pièce de fixation 6 dans la gorge annulaire 21, la tête de vis 14 vient axialement en appui contre la deuxième extrémité 6b de la pièce de fixation 6 et s'oppose à un déplacement vers le premier axe longitudinal I-I des parties distales libres 610b à 630b des ailettes longitudinales 61b à 63b (figure 8). La deuxième extrémité 6b reste ainsi encliquetée dans la gorge annulaire 21 de façon à s'opposer à une extraction de la deuxième extrémité 6b de la pièce de fixation 6 hors de la gorge annulaire 21.

Il est à noter que les parties distales libres 610b à 630b des ailettes longitudinales 61b à 63b peuvent, après encliquetage, ne pénétrer dans la gorge annulaire 21 que de façon partielle. Cela permet par exemple de rendre plus facile un encliquetage et de faciliter un retrait volontaire de l'âme de prothèse dentaire 10 à l'écart de l'implant dentaire 2 (la déformation radiale nécessaire vers l'intérieur des parties distales libres 610b à 630b des ailettes longitudinales 61b à 63b étant moindre). Dans ce cas, pour assurer une bonne fixation de l'âme de prothèse dentaire 10 sur l'implant dentaire 2, après réception de la deuxième extrémité 6b de la pièce de fixation 6 dans la gorge annulaire 21, un déplacement relatif en translation de la vis de fixation 8 vers l'extrémité proximale 2a de l'implant dentaire 2 selon le premier axe longitudinal I-I provoque une expansion radiale de la deuxième extrémité 6b de la pièce de fixation 6 (en l'espèce un écartement relatif des parties distales libres 610b à 630b des ailettes longitudinales 61b à 63b). Cette expansion radiale augmente la pénétration des parties distales libres 610b à 630b des ailettes longitudinales 61b à 63b dans la gorge annulaire 21 et donc la retenue de l'âme de prothèse dentaire 10 sur l'implant dentaire 2.

On voit plus particulièrement sur la figure 7 que la gorge annulaire 21 comporte un tronçon proximal 21a tronconique sur lequel vient porter en appui la deuxième extrémité 6b de la pièce de fixation 6 au moyen d'une surface sensiblement tronconique 22. Ainsi, l'expansion radiale de la deuxième extrémité 6b de la pièce de fixation 6 induit selon le premier axe longitudinal I-I un pressage de l'extrémité proximale 10a de l'âme de prothèse dentaire 10 vers l'extrémité distale 2b de l'implant dentaire 2.

La première extrémité 6a de la pièce de fixation 6 est de son côté reçue dans le logement radial 9 de façon réversible par encliquetage. Là encore, pour assurer un encliquetage réversible, il est fait usage d'une surface de contact sensiblement tronconique 23 et d'un tronçon distal 9b tronconique du logement radial 9, coopérant de telle sorte qu'une traction de la pièce de fixation 6 selon le premier axe longitudinal I-I à l'écart de l'extrémité proximale 2a de l'implant dentaire 2 induit un déplacement (rapprochement) des parties distales libres 610a à 630a des ailettes longitudinales 61a à 63a vers le premier axe longitudinal I-I.

Pour conserver la première extrémité 6a de la pièce de fixation 6 encliquetée dans le logement radial 9, la première extrémité 6a de la pièce de fixation 6 et l'insert fileté intérieurement 5 sont conformés de façon que, lorsque l'insert fileté intérieurement 5 est en appui axialement contre la première extrémité 6a de la pièce de fixation 6, cet appui s'oppose à un retrait de la première extrémité 6a de la pièce de fixation 6 hors du logement radial 9. Ceci est obtenu là encore par une surface tronconique 5c prévue à l'extrémité distale 5b de l'insert fileté intérieurement 5 (voir figure 2).

Il est à noter que les parties distales libres 610a à 630a des ailettes longitudinales 61a à 63a peuvent, après encliquetage, ne pénétrer dans le logement radial 9 (qui est ici une gorge annulaire) que de façon partielle. Cela permet par exemple de rendre plus facile un encliquetage et de faciliter un retrait volontaire de la pièce de fixation 6 hors de l'implant dentaire 2 (la déformation radiale nécessaire vers l'intérieur des parties distales libres 610a à 630a des ailettes longitudinales 61a à 63a étant moindre). Dans ce cas, pour assurer une bonne fixation de la pièce de fixation 6 dans l'implant dentaire 2, après réception de la première extrémité 6a de la pièce de fixation 6 dans le logement radial 9, un déplacement relatif en translation de l'insert fileté intérieurement 5 vers l'extrémité distale 2b de l'implant dentaire 2 selon le premier axe longitudinal I-I provoque une expansion radiale de la première extrémité 6a de la pièce de fixation 6 (en l'espèce un écartement relatif des parties distales libres 610a à 630a des ailettes longitudinales 61a à 63a). Cette expansion radiale augmente la pénétration des parties distales libres 610a à 630a des ailettes longitudinales 61a à 63a dans le logement radial 9, et donc la retenue de la pièce de fixation 6 dans l'implant dentaire 2.

La première extrémité 6a de la pièce de fixation 6 comporte également un siège sensiblement tronconique 24 contre lequel vient en appui la surface tronconique 5c, et qui est sensiblement complémentaire de la surface tronconique 5c. Cette complémentarité permet de répartir les contraintes par un contact surfacique entre l'insert fileté intérieurement 5 et la première extrémité 6a.

On observe plus particulièrement sur les figures 7 et 8 que l'âme de prothèse dentaire 10 comprend une extrémité proximale 10a conformée pour venir porter directement en appui contre l'extrémité distale 2b de l'implant dentaire 2. L'implant dentaire 2 et l'âme de prothèse dentaire 10 étant en céramique, on obtient un contact céramique sur céramique réduisant les risques d'une usure prématurée.

Sur la figure 7, on observe que l'âme de prothèse dentaire 10 comporte un logement proximal 25, à forme de section transversale non circulaire, destiné à recevoir par pénétration axiale un prolongement distal 26 de l'implant dentaire 2 comportant également une forme de section transversale non circulaire, par exemple complémentaire de celle du logement proximal 25. Le logement proximal 25 et le prolongement distal 26 sont conformés de façon à constituer des moyens d'indexation en rotation 27 de l'âme de prothèse dentaire 10 et de l'implant dentaire 2 autour du premier axe longitudinal I-I.

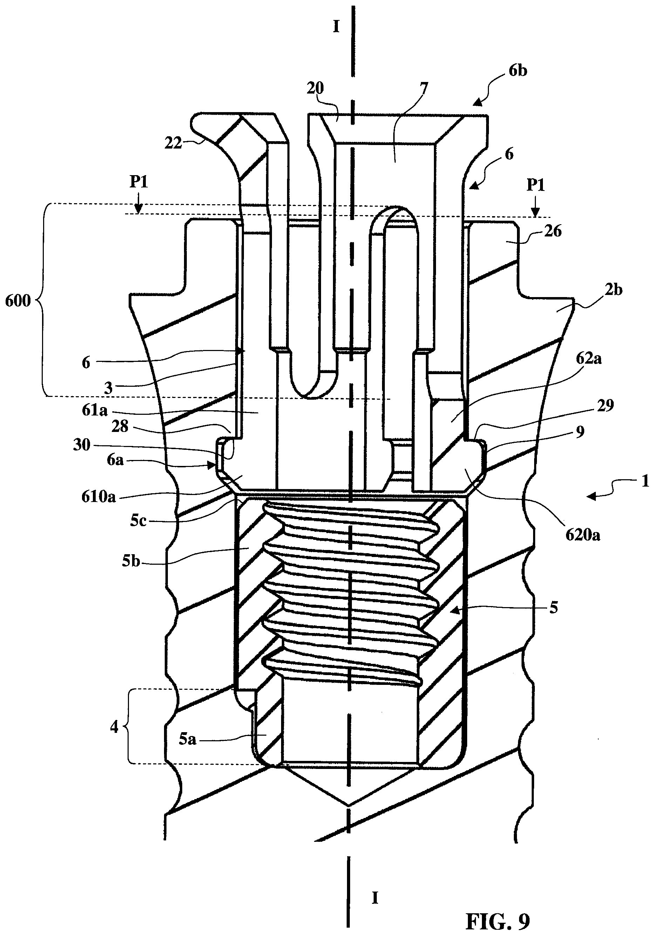

Le deuxième mode de réalisation d'ensemble 1 illustré sur la figure 9 diffère du premier mode de réalisation illustré sur les figures 1 à 8 par le fait que la première extrémité 6a de la pièce de fixation 6 est reçue dans le logement radial 9 de façon irréversible.

Pour ce faire, le logement radial 9 comprend un épaulement distal 28 comportant une face d'appui 29 perpendiculaire au premier axe longitudinal I-I. De son côté, les parties distales libres 610a à 630a des ailettes longitudinales 61a à 63a comportent des faces inférieures définissant une surface d'appui 30 sensiblement en forme de couronne et orientée perpendiculairement au premier axe longitudinal I-I.

Lorsque la pièce de fixation 6 est encliquetée dans l'implant dentaire 2, le tronçon axial intermédiaire 600 dépasse hors de l'implant dentaire 2. Ainsi, dans le cas où il serait nécessaire d'extraire l'insert fileté intérieurement 5, la pièce de fixation 6 peut être tronçonné selon un plan P1 intersectant le tronçon axial intermédiaire 600. Les ailettes 61a à 63a sont alors désolidarisées et peuvent être retirées de l'implant dentaire 2.

Le dépassement du tronçon axial intermédiaire 600 hors de l'implant dentaire 2 est également présent dans le premier mode de réalisation, ce qui garantit une possibilité d'extraction de la pièce de fixation 6 dans le cas où le praticien ne parvient pas à désencliqueter la première extrémité 6a hors du logement radial 9.

Sur les figures 1 à 8, l'âme de prothèse dentaire 10 comporte une forme extérieure sensiblement en forme de dent obtenue de préférence par usinage d'un bloc de céramique ou produite par frittage d'une poudre céramique. Une telle âme de prothèse dentaire 10 peut éventuellement être revêtue par le prothésiste d'une ou plusieurs couches très légères de texturation ou de coloration procurant un aspect le plus proche d'une dent naturelle.

En alternative, l'âme de prothèse dentaire 10 peut être un bloc de céramique de forme extérieure sensiblement cylindrique ou prismatique et destiné à être usiné pour obtenir une forme extérieure sensiblement en forme de dent (comme par exemple illustré dans les documents KR 10-2013-0097820, US 2012/0251979 et EP 2 837 357).

Un exemple d'utilisation du premier mode de réalisation d'ensemble 1 pour la fixation d'une âme de prothèse dentaire 10 va désormais être expliqué en relation avec les figures 1 à 8.

Le patient comporte en bouche l'implant dentaire 2 de la figure 1 qui est ostéointégré à l'issue d'une période de cicatrisation.

Le praticien commence par introduire dans le logement intérieur de connexion 3 l'insert fileté intérieurement 5 jusqu'à faire pénétrer le tronçon 5a à section transversale non circulaire dans le tronçon 4 à section transversale non circulaire. Le risque de perte ou d'avalement de l'insert fileté intérieurement 5 est alors très réduit, du fait de son enfoncement tout au fond du logement intérieur de connexion 3.

Le praticien insère ensuite la pièce de fixation 6 des figures 4 et 5 jusqu'à encliqueter de façon réversible la première extrémité 6a de celle-ci dans le logement radial 9 se présentant sous la forme d'une gorge annulaire. On se trouve alors dans la configuration illustrée sur la figure 6. La pièce de fixation 6 retient ainsi captif l'insert fileté intérieurement 5 dans le logement intérieur de connexion 3. Il n'y a pas de risque de perte ou d'avalement de l'insert fileté intérieurement 5 et/ou de la pièce de fixation 6, qui forment un assemblage unitaire.

Le praticien introduit alors et commence à visser la vis de fixation 8 dans l'insert fileté intérieurement 5 jusqu'à venir dans la position illustrée sur la figure 7. La tête de vis 14 est alors à l'écart de la deuxième extrémité 6b de la pièce de fixation 6 pour ne pas gêner un mouvement radial des extrémités distales 610b à 630b des ailettes longitudinales 61b à 63b vers le premier axe longitudinal I-I. Il n'y a pas de risque de perte ou d'avalement de l'insert fileté intérieurement 5 et/ou de la pièce de fixation 6 et/ou de la vis de fixation 8, qui forment un assemblage unitaire.

Le praticien peut en toute quiétude rapporter l'âme de prothèse 10 puis la disposer sur l'implant 2 selon le mouvement illustré par la flèche 17. Lors de ce mouvement, la tête de vis 14 et la deuxième extrémité 6b s'engagent dans le premier tronçon de passage 12, et les extrémités distales 610a à 630a des ailettes longitudinales 61a à 63a viennent s'encliqueter dans la gorge annulaire 21. Il n'y a pas de risque de perte ou d'avalement de l'insert fileté intérieurement 5 et/ou de la pièce de fixation 6 et/ou de l'âme de prothèse 10, qui forment un assemblage unitaire.

Les encliquetages étant réversibles, le praticien peut à tout moment séparer si nécessaire les composants assemblés.

Le praticien introduit alors un outil de vissage à travers le deuxième tronçon de passage 13 pour entraîner en rotation la vis de fixation 8. Lors de ce vissage, la tête de vis 14 vient au contact de la première extrémité 6a de la pièce de fixation 6 et s'oppose à tout échappement des extrémités distales 610a à 630a des ailettes longitudinales 61a à 63a hors de la gorge annulaire 21.

En poursuivant le vissage, l'insert fileté intérieurement 5 est déplacé légèrement vers l'extrémité distale 2b de l'implant dentaire 2 jusqu'à venir en appui contre la deuxième extrémité 6b. L'insert fileté intérieurement 5 s'oppose à tout échappement des extrémités distales 610b à 630b des ailettes longitudinales 61b à 63b hors du logement radial 9.

En poursuivant encore le vissage pour mettre en tension la vis de fixation 8, le praticien produit une légère expansion de la première extrémité 6a (et éventuellement de la deuxième extrémité 6b) de la pièce de fixation 6, ce qui induit un pressage axial de l'extrémité proximale 10a de l'âme de prothèse dentaire contre l'extrémité distale 2b de l'implant dentaire 2. On se trouve alors dans la configuration illustrée sur la figure 8.

Le praticien peut enfin procéder au bouchage de l'orifice du deuxième tronçon de passage 13 à l'aide d'un matériau approprié.

L'utilisation du deuxième mode de réalisation d'ensemble 1 illustré sur la figure 9 est similaire à celle du premier mode de réalisation. Elle ne diffère qu'en ce que l'encliquetage de la pièce de fixation 6 est irréversible.

La présente invention n'est pas limitée aux modes de réalisation qui ont été explicitement décrits, mais par l'étendue des revendications ci-après.

## Revendications

1. Ensemble (1) de composants pour la restauration prothétique dentaire, comprenant un implant dentaire (2) en céramique destiné à être installé dans l'os maxillaire ou mandibulaire d'un patient, s'étendant selon un premier axe longitudinal (I-I) entre une extrémité proximale (2a) et une extrémité distale (2b), à logement intérieur de connexion (3) s'étendant depuis l'extrémité distale (2b) et en direction de l'extrémité proximale (2a), dans lequel :
- le logement intérieur de connexion (3) comporte au moins un tronçon (4) à section transversale non circulaire,
- l'ensemble (1) comprend un insert fileté intérieurement (5), conformé de façon à être rapporté dans le tronçon (4) à section transversale non circulaire du logement intérieur de connexion (3) de l'implant dentaire (2) en y étant indexé en rotation autour du premier axe longitudinal (I-I),
- l'ensemble (1) comprend une pièce de fixation (6) à premier passage traversant axial (7) présentant une section transversale de dimensions suffisantes pour le passage d'un élément fileté (8) destiné à coopérer par vissage avec l'insert fileté intérieurement (5), conformée pour s'engager dans un logement radial (9) ménagé dans la paroi latérale (3a) du logement intérieur de connexion (3) de l'implant dentaire (2) de façon à former une butée axiale s'opposant à une extraction de l'insert fileté intérieurement (5) hors du tronçon (4) à section transversale non circulaire du logement intérieur de connexion (3),
- l'ensemble (1) comprend une vis de fixation (8) comportant une tête de vis (14) depuis laquelle s'étend une tige de vis (15) munie d'un tronçon fileté (16) destiné à être reçu par vissage dans ledit insert fileté intérieurement (5),
- la pièce de fixation (6) s'étend entre une première extrémité (6a), destinée à s'engager dans le logement intérieur de connexion (3) de l'implant dentaire (2), et une deuxième extrémité (6b),
**caractérisé en ce que** :
- l'ensemble (1) comporte une âme de prothèse dentaire (10) transfixée en céramique comprenant un deuxième passage traversant (11) constitué par des premier (12) et deuxième (13) tronçons de passage successifs, ledit premier tronçon de passage (12) s'étendant depuis une extrémité proximale (10a) de l'âme de prothèse dentaire (10) transfixée selon un deuxième axe longitudinal (II-II), et ledit deuxième tronçon de passage (13) prolongeant le premier tronçon de passage (12) de telle sorte que les premier (12) et deuxième (13) tronçons de passage forment un angle (A) non nul entre eux,
- le premier tronçon de passage (12) de l'âme de prothèse dentaire (10) transfixée comporte des dimensions transversales permettant la réception de la deuxième extrémité (6b) de la pièce de fixation (6) et de la tête de vis (14) par pénétration axiale selon le deuxième axe longitudinal (II-II) depuis l'extrémité proximale (10a) de l'âme de prothèse dentaire (10) transfixée,
- la tête de vis (14) et la deuxième extrémité (6b) de la pièce de fixation (6) sont conformées de façon qu'un déplacement relatif en translation de la vis de fixation (8) vers l'extrémité proximale (2a) de l'implant dentaire (2) selon le premier axe longitudinal (I-I) provoque une expansion radiale de la deuxième extrémité (6b) de la pièce de fixation (6) pour retenir l'âme de prothèse dentaire (10) transfixée sur l'implant dentaire (2).

2. Ensemble (1) selon la revendication 1, **caractérisé en ce que** le deuxième tronçon de passage (13) de l'âme de prothèse dentaire (10) comporte des dimensions transversales inférieures à celles du premier tronçon de passage (12), mais suffisantes pour le passage d'un outil permettant d'entraîner en rotation la vis de fixation (8) selon le premier axe longitudinal (I-I).

3. Ensemble (1) selon l'une des revendications 1 ou 2, **caractérisé en ce qu'**un déplacement relatif en translation de la vis de fixation (8) vers l'extrémité proximale (2a) de l'implant dentaire (2) selon le premier axe longitudinal (I-I) provoque une expansion radiale de la deuxième extrémité (6b) de la pièce de fixation (6).

4. Ensemble (1) selon l'une des revendications 1 ou 2, **caractérisé en ce que** l'âme de prothèse dentaire (10) comporte une gorge annulaire (21) destinée à recevoir la deuxième extrémité (6b) de la pièce de fixation (6).

5. Ensemble (1) selon la revendication 4, **caractérisé en ce qu'**un déplacement relatif en translation de la vis de fixation (8) vers l'extrémité proximale (2a) de l'implant dentaire (2) selon le premier axe longitudinal (I-I) provoque une expansion radiale de la deuxième extrémité (6b) de la pièce de fixation (6) pour engager la deuxième extrémité (6b) de la pièce de fixation (6) dans la gorge annulaire (21).

6. Ensemble (1) selon la revendication 4, **caractérisé en ce que**, lorsque le premier tronçon de passage (12) reçoit la deuxième extrémité (6b) de la pièce de fixation (6) et la tête de vis (14) par pénétration axiale selon le premier axe longitudinal (I-I), la deuxième extrémité (6b) de la pièce de fixation (6) s'engage dans la gorge annulaire (21) de façon réversible, de préférence par encliquetage.

7. Ensemble (1) selon la revendication 6, **caractérisé en ce qu'**après réception de la deuxième extrémité (6b) de la pièce de fixation (6) dans la gorge annulaire (21), la tête de vis (14) vient axialement en appui contre la deuxième extrémité (6b) de la pièce de fixation (6) et s'oppose à une extraction de la deuxième extrémité (6b) de la pièce de fixation (6) hors de la gorge annulaire (21).

8. Ensemble (1) selon la revendication 6, **caractérisé en ce qu'**après réception de la deuxième extrémité (6b) de la pièce de fixation (6) dans la gorge annulaire (21), un déplacement relatif en translation de la vis de fixation (8) vers l'extrémité proximale (2a) de l'implant dentaire (2) selon le premier axe longitudinal (I-I) provoque une expansion radiale de la deuxième extrémité (6b) de la pièce de fixation (6).

9. Ensemble (1) selon l'une des revendications 5 ou 8, **caractérisé en ce que** la gorge annulaire (21) et/ou la deuxième extrémité (6b) de la pièce de fixation (6) comportent des surfaces de contact respectives conformées de façon que l'expansion radiale de la deuxième extrémité (6b) de la pièce de fixation (6) induise selon le premier axe longitudinal (I-I) un pressage de l'extrémité proximale (10a) de l'âme de prothèse dentaire (10) vers l'extrémité distale (2b) de l'implant dentaire (2).

10. Ensemble (1) selon l'une quelconque des revendications 1 à 9, **caractérisé en ce que** :
- la première extrémité (6a) de la pièce de fixation (6) comporte un premier ensemble (60a) d'ailettes longitudinales (61a-63a) à parties distales libres (610a-630a),
- la deuxième extrémité (6b) de la pièce de fixation (6) comporte un deuxième ensemble (60b) d'ailettes longitudinales (61b-63b) à parties distales libres (610b-630b),
- les premier (60a) et deuxième (60b) ensembles d'ailettes longitudinales (61a-63a ; 61b-63b) sont définis par une pluralité de fentes longitudinales (F1-F6) s'étendant sur une partie seulement de la longueur de la pièce de fixation (6) et prenant naissance de façon alternée depuis la première extrémité (6a) et depuis la deuxième extrémité (6b), lesdites fentes (F1-F6) s'étendant toutes le long d'un même tronçon axial intermédiaire (600) de la pièce de fixation (6).

11. Ensemble (1) selon l'une quelconque des revendications 1 à 10, **caractérisé en ce que** la première extrémité (6a) de la pièce de fixation (6) est reçue dans le logement radial (9) de façon irréversible, de préférence par encliquetage.

12. Ensemble (1) selon l'une quelconque des revendications 1 à 10, **caractérisé en ce que** la première extrémité (6a) de la pièce de fixation (6) est reçue dans le logement radial (9) de façon réversible, de préférence par encliquetage.

13. Ensemble (1) selon la revendication 12, **caractérisé en ce que** la première extrémité (6a) de la pièce de fixation (6) et l'insert fileté intérieurement (5) sont conformés de façon que, lorsque l'insert fileté intérieurement (5) est en appui axialement contre la première extrémité (6a) de la pièce de fixation (6), cet appui s'oppose à un retrait de la première extrémité (6a) de la pièce de fixation (6) hors du logement radial (9).

14. Ensemble (1) selon l'une des revendications 12 ou 13, **caractérisé en ce qu'**un déplacement relatif en translation de l'insert fileté intérieurement (5) vers l'extrémité distale (2b) de l'implant dentaire (2) selon le premier axe longitudinal (I-I) provoque une expansion radiale de la première extrémité (6a) de la pièce de fixation (6).

15. Ensemble (1) selon l'une quelconque des revendications 1 à 14, **caractérisé en ce que** l'âme de prothèse dentaire (10) comprend une extrémité proximale (10a) conformée pour venir porter directement en appui contre l'extrémité distale (2b) de l'implant dentaire (2).

16. Ensemble (1) selon l'une quelconque des revendications 1 à 15, **caractérisé en ce qu'**il comporte des moyens d'indexation en rotation (27) de l'âme de prothèse dentaire (10) et de l'implant dentaire (2) autour du premier axe longitudinal (I-I).

17. Ensemble (1) selon l'une quelconque des revendications 1 à 16, **caractérisé en ce que** l'âme de prothèse dentaire (10) comporte une forme extérieure sensiblement en forme de dent obtenue de préférence par usinage d'un bloc de céramique ou produite par frittage d'une poudre céramique.

18. Ensemble (1) selon l'une quelconque des revendications 1 à 17, **caractérisé en ce que** l'âme de prothèse dentaire (10) est un bloc de céramique de forme extérieure sensiblement cylindrique ou prismatique et destiné à être usiné pour obtenir une forme extérieure sensiblement en forme de dent.

## Patentansprüche

1. Baugruppe (1) aus Komponenten für die prothetische Zahnrestauration, umfassend ein keramisches Zahnimplantat (2), das vorgesehen ist, in den Ober- oder Unterkieferknochen eines Patienten eingebaut zu werden und sich entlang einer ersten Längsachse (I-I) zwischen einem proximalen Ende (2a) und ein distalen Ende (2b) erstreckt, mit einem inneren Verbindungslager (3), das sich ausgehend vom distalen Ende (2b) in Richtung des proximalen Endes (2a) erstreckt, wobei:
• das innere Verbindungslager (3) mindestens einen Abschnitt (4) mit einem nicht kreisförmigen Querschnitt aufweist,
• die Baugruppe (1) einen Innengewindeeinsatz (5) umfasst, der derart angepasst ist, dass er in dem Abschnitt (4) mit nicht kreisförmigem Querschnitt des inneren Verbindungslagers (3) des Zahnimplantats (2) angebracht und dort zur Rotation um die erste Längsachse (I-I) indexiert ist,
• die Baugruppe (1) ein Befestigungsteil (6) mit einer ersten axialen Durchgangspassage (7) umfasst, die einen Querschnitt mit ausreichenden Dimensionen für die Passage eines Gewindeelements (8) präsentiert, das vorgesehen ist, durch Verschrauben mit dem Innengewindeeinsatz (5) zu kooperieren, das angepasst ist, um in ein radiales Lager (9) einzugreifen, das in der Seitenwand (3a) des inneren Verbindungslagers (3) des Zahnimplantats (2) derart ausgebildet ist, um einen axialen Anschlag zu formen, der einer Extraktion des Innengewindeeinsatzes (5) aus dem Abschnitt (4) mit einem nicht kreisförmigen Querschnitt des inneren Verbindungslagers (3) entgegenwirkt,
• die Baugruppe (1) eine Befestigungsschraube (8) umfasst, die einen Schraubenkopf (14) aufweist, von dem ausgehend sich ein Schraubenschaft (15) erstreckt, der mit einem Gewindeabschnitt (16) versehen ist, der vorgesehen ist, durch Verschrauben in besagtem Innengewindeeinsatz (5) aufgenommen zu werden,
• das Befestigungsteil (6) sich zwischen einem ersten Ende (6a), vorgesehen um in das innere Verbindungslager (3) des Zahnimplantats (2) einzugreifen, und einem zweiten Ende (6b) erstreckt,
**dadurch gekennzeichnet, dass**:
• die Baugruppe (1) einen in Keramik transfixierten Zahnprothesenkern (10) aufweist, der eine zweite Durchgangspassage (11) umfasst, die mit einem ersten (12) und zweiten (13) aufeinanderfolgenden Passagenabschnitten ausgebildet ist, wobei sich besagter erster Passagenabschnitt (12) ausgehend von einem proximalen Ende (10a) des Zahnprothesenkerns (10) erstreckt, das entlang einer zweiten Längsachse (II-II) transfixiert ist, und der zweite Passagenabschnitt (13) den ersten Passagenabschnitt (12) so verlängert, dass der erste (12) und der zweite (13) Passagenabschnitt einen Winkel (A) zwischen ihnen formen, der nicht Null ist,
• der erste Passagenabschnitt (12) des transfixierten Zahnprothesenkerns (10) Querdimensionen aufweist, die das Empfangen des zweiten Endes (6b) des Befestigungsteils (6) und des Schraubenkopfs (14) durch axiale Penetration entlang der zweiten Längsachse (II-II) ausgehend vom proximalen Ende (10a) des transfixierten Zahnprothesenkerns (10) erlauben,
• der Schraubenkopf (14) und das zweite Ende (6b) des Befestigungsteils (6) derart angepasst sind, dass eine relative Translationsbewegung der Befestigungsschraube (8) hin zum proximalen Ende (2a) des Zahnimplantats (2) entlang der ersten Längsachse (I-I) eine radiale Expansion des zweiten Endes (6b) des Befestigungsteils (6) provoziert, um den Zahnprothesenkern (10) zurückzuhalten, der auf dem Zahnimplantat (2) transfixiert ist.

2. Baugruppe (1) nach Anspruch 1, **dadurch gekennzeichnet, dass** der zweite Passagenabschnitt (13) des Zahnprothesenkerns (10) Querdimensionen aufweist, die kleiner als die des ersten Passagenabschnitts (12) sind, jedoch ausreichend, um die Passage eines Mittels zum Anziehen der Befestigungsschraube (8) entlang der ersten Längsachse (I-I) durch Rotation zu erlauben.

3. Baugruppe (1) nach einem der Ansprüche 1 oder 2, **dadurch gekennzeichnet, dass** eine relative Translationsbewegung der Befestigungsschraube (8) hin zum proximalen Ende (2a) des Zahnimplantats (2) entlang der ersten Längsachse (I-I) eine radiale Expansion des zweiten Endes (6b) des Befestigungsteils (6) provoziert.

4. Baugruppe (1) nach einem der Ansprüche 1 oder 2, **dadurch gekennzeichnet, dass** der Zahnprothesenkern (10) eine Ringnut (21) aufweist, die vorgesehen ist, das zweite Ende (6b) des Befestigungsteils (6) aufzunehmen.

5. Baugruppe (1) nach Anspruch 4, **dadurch gekennzeichnet, dass** eine relative Translationsbewegung der Befestigungsschraube (8) hin zum proximalen Ende (2a) des Zahnimplantats (2) entlang der ersten Längsachse (I-I) eine radiale Expansion des zweiten Endes (6b) des Befestigungsteils (6) provoziert, damit das zweite Ende (6b) des Befestigungsteils (6) in die Ringnut (21) eingreift.

6. Baugruppe (1) nach Anspruch 4, **dadurch gekennzeichnet, dass** der erste Passagenabschnitt (12) das zweite Ende (6b) des Befestigungsteils (6) und den Schraubenkopf (14) durch axiale Penetration entlang der ersten Längsachse (I-I) aufnimmt, und dass das zweite Ende (6b) des Befestigungsteils (6) in die Ringnut (21) reversibel eingreift, vorzugsweise durch Einschnappen.

7. Baugruppe (1) nach Anspruch 6, **dadurch gekennzeichnet, dass** nach Empfang des zweiten Endes (6b) des Befestigungsteils (6) in der Ringnut (21) der Schraubenkopf (14) axial gegen das zweite Ende (6b) des Befestigungsteils (6) zu Anlage kommt und einer Extraktion des zweiten Endes (6b) des Befestigungsteils (6) aus der Ringnut (21) entgegenwirkt.

8. Baugruppe (1) nach Anspruch 6, **dadurch gekennzeichnet, dass** nach Empfang des zweiten Endes (6b) des Befestigungsteils (6) in der Ringnut (21) eine relative Translationsbewegung der Befestigungsschraube (8) hin zum proximalen Ende (2a) des Zahnimplantats (2) entlang der ersten Längsachse (I-I) eine radiale Expansion des zweiten Endes (6b) des Befestigungsteils (6) provoziert.

9. Baugruppe (1) nach einem der Ansprüche 5 oder 8, **dadurch gekennzeichnet, dass** die Ringnut (21) und / oder das zweite Ende (6b) des Befestigungsteils (6) entsprechende Kontaktflächen aufweisen, die so geformt sind, dass die radiale Expansion des zweiten Endes (6b) des Befestigungsteils (6) entlang der ersten Längsachse (I-I) ein Drücken des proximalen Endes (10a) des 'Zahnprothesenkerns (10) hin zum distalen Ende (2b) des Zahnimplantats (2) induziert.

10. Baugruppe (1) nach einem der Ansprüche 1 bis 9, **dadurch gekennzeichnet, dass**:
• das erste Ende (6a) des Befestigungsteils (6) eine erste Anordnung (60a) von Längsflügeln (61a-63a) mit freien distalen Teilstücken (610a-630a) aufweist,
• das zweite Ende (6b) des Befestigungsteils (6) eine zweite Anordnung (60b) von Längsflügeln (61b-63b) mit freien distalen Teilstücken (610b-630b) aufweist,
• die erste (60a) und die zweite (60b) Anordnung von Längsflügeln (61a-63a; 61b-63b) durch eine Mehrzahl Längsschlitze (F1-F6) definiert sind, die sich nur über einen Teil der Länge des Befestigungsteils (6) erstrecken und alternierend vom ersten Ende (6a) und vom zweiten Ende (6b) Ausgang nehmen, wobei sich besagte Schlitze (F1-F6) alle entlang des gleichen axialen Zwischenabschnitts (600) des Befestigungsteils (6) erstrecken.

11. Baugruppe (1) nach einem der Ansprüche 1 bis 10, **dadurch gekennzeichnet, dass** das erste Ende (6a) des Befestigungsteils (6) irreversibel im radialen Lager (9) aufgenommen ist, vorzugsweise durch Einschnappen.

12. Baugruppe (1) nach einem der Ansprüche 1 bis 10, **dadurch gekennzeichnet, dass** das erste Ende (6a) des Befestigungsteils (6) reversibel im radialen Lager (9) aufgenommen ist, vorzugsweise durch Einschnappen.

13. Baugruppe (1) nach Anspruch 12, **dadurch gekennzeichnet, dass** das erste Ende (6a) des Befestigungsteils (6) und der Innengewindeeinsatz (5) derart angepasst sind, dass der Innengewindeeinsatz (5) axial gegen das erste Ende (6a) des Befestigungsteils (6) in Anlage ist, und dass diese Anlage einem Schwinden des ersten Endes (6a) des Befestigungsteils (6) aus dem radialen Lager (9) entgegenwirkt.

14. Baugruppe (1) nach einem der Ansprüche 12 oder 13, **dadurch gekennzeichnet, dass** eine relative Translationsbewegung des Innengewindeeinsatzes (5) hin zum distalen Ende (2b) des Zahnimplantats (2) entlang der ersten Längsachse (I-I) eine radiale Expansion des ersten Endes (6a) des Befestigungsteils (6) bewirkt.

15. Baugruppe (1) nach einem der Ansprüche 1 bis 14, **dadurch gekennzeichnet, dass** der Zahnprothesenkern (10) ein proximales Ende (10a) umfasst, das so angepasst ist, dass es direkt gegen das distale Ende (2b) des Zahnimplantats (2) zur Anlage kommt.

16. Baugruppe (1) nach einem der Ansprüche 1 bis 15, **dadurch gekennzeichnet, dass** sie zur Rotation um die um die erste Längsachse (I-I) indexierte Mittel (27) des Zahnprothesenkerns (10) und des Zahnimplantats (2) aufweist.

17. Baugruppe (1) nach einem der Ansprüche 1 bis 16, **gekennzeichnet dadurch, dass** der Zahnprothesenkern (10) eine äußere Form im Wesentlichen in Form eines Zahns aufweist, der vorzugsweise durch Bearbeiten eines Keramikblocks erhalten ist oder durch Sintern eines Keramikpulvers produziert ist.

18. Baugruppe (1) nach einem der Ansprüche 1 bis 17, **dadurch gekennzeichnet, dass** der Zahnprothesenkern (10) ein Keramikblock mit im Wesentlichen zylindrischer oder prismatischer Außenform ist und vorgesehen ist, zum Erhalten einer äußeren Form bearbeitet zu werden, die im Wesentlichen als Zahn geformt ist.

## Claims

1. Set (1) of components for dental prosthetic restoration, comprising a ceramic dental implant (2) intended to be fitted in the upper jawbone or lower jawbone of a patient and extending along a first longitudinal axis (I-I) between a proximal end (2a) and a distal end (2b), with an inner connection seat (3) extending from the distal end (2b) in the direction of the proximal end (2a), in which:
- the inner connection seat (3) has at least one portion (4) of non-circular cross section,
- the set (1) comprises an internally threaded insert (5), configured in such a way as to be mounted in the portion (4) of non-circular cross section of the inner connection seat (3) of the dental implant (2) by being rotationally indexed therein about the first longitudinal axis (I-I),
- the set (1) comprises a fixing piece (6) with a first axial through-passage (7) having a cross section of sufficient dimensions for the passage of a threaded element (8) intended to cooperate by screwing with the internally threaded insert (5), configured to engage in a radial seat (9) formed in the lateral wall (3a) of the inner connection seat (3) of the dental implant (2) in such a way as to form an axial abutment opposing an extraction of the internally threaded insert (5) from the portion (4) of non-circular cross section of the inner connection seat (3),
- the set (1) comprises a fixing screw (8) having a screw head (14) from which there extends a screw shank (15) provided with a threaded portion (16) intended to be received by screwing in said internally threaded insert (5),
- the fixing piece (6) extends between a first end (6a), intended to engage in the inner connection seat (3) of the dental implant (2), and a second end (6b), **characterized in that**:
- the set (1) has a transfixed dental prosthesis core (10) of ceramic comprising a second through-passage (11) formed by first (12) and second (13) successive passage portions, said first passage portion (12) extending from a proximal end (10a) of the transfixed dental prosthesis core (10) along a second longitudinal axis (II-II), and said second passage portion (13) continuing the first passage portion (12) in such a way that the first (12) and second (13) passage portions form a non-zero angle (A) between them,
- the first passage portion (12) of the transfixed dental prosthesis core (10) has transverse dimensions permitting reception of the second end (6b) of the fixing piece (6) and the screw head (14) by axial penetration along the second longitudinal axis (II-II) from the proximal end (10a) of the transfixed dental prosthesis core (10),
- the screw head (14) and the second end (6b) of the fixing piece (6) are configured so that a relative movement in translation of the fixing screw (8) toward the proximal end (2a) of the dental implant (2) along the first longitudinal axis (I-I) causes a radial expansion of the second end (6b) of the fixing piece (6), in order to retain the transfixed dental prosthesis core (10) on the dental implant (2).

2. Set (1) according to Claim 1, **characterized in that** the second passage portion (13) of the dental prosthesis core (10) has transverse dimensions which are smaller than those of the first passage portion (12) but which are sufficient for passage of a tool for driving the fixing screw (8) in rotation along the first longitudinal axis (I-I).

3. Set (1) according to either of Claims 1 and 2, **characterized in that** a relative movement in translation of the fixing screw (8) toward the proximal end (2a) of the dental implant (2) along the first longitudinal axis (I-I) causes a radial expansion of the second end (6b) of the fixing piece (6).

4. Set (1) according to either of Claims 1 and 2, **characterized in that** the dental prosthesis core (10) has an annular groove (21) intended to receive the second end (6b) of the fixing piece (6).

5. Set (1) according to Claim 4, **characterized in that** a relative movement in translation of the fixing screw (8) toward the proximal end (2a) of the dental implant (2) along the first longitudinal axis (I-I) causes a radial expansion of the second end (6b) of the fixing piece (6) in order to engage the second end (6b) of the fixing piece (6) in the annular groove (21).

6. Set (1) according to Claim 4, **characterized in that**, when the first passage portion (12) receives the second end (6b) of the fixing piece (6) and the screw head (14) by axial penetration along the first longitudinal axis (I-I), the second end (6b) of the fixing piece (6) engages in the annular groove (21) reversibly, preferably with a snap-fit action.

7. Set (1) according to Claim 6, **characterized in that**, after the second end (6b) of the fixing piece (6) has been received in the annular groove (21), the screw head (14) comes to bear axially against the second end (6b) of the fixing piece (6) and opposes an extraction of the second end (6b) of the fixing piece (6) from the annular groove (21).

8. Set (1) according to Claim 6, **characterized in that**, after the second end (6b) of the fixing piece (6) has been received in the annular groove (21), a relative movement in translation of the fixing screw (8) toward the proximal end (2a) of the dental implant (2) along the first longitudinal axis (I-I) causes a radial expansion of the second end (6b) of the fixing piece (6).

9. Set (1) according to either of Claims 5 and 8, **characterized in that** the annular groove (21) and/or the second end (6b) of the fixing piece (6) have respective contact surfaces which are configured such that the radial expansion of the second end (6b) of the fixing piece (6) induces, along the first longitudinal axis (I-I), a pressing of the proximal end (10a) of the dental prosthesis core (10) toward the distal end (2b) of the dental implant (2).

10. Set (1) according to any one of Claims 1 to 9, **characterized in that**:
- the first end (6a) of the fixing piece (6) has a first set (60a) of longitudinal fins (61a-63a) with free distal parts (610a-630a),
- the second end (6b) of the fixing piece (6) has a second set (60b) of longitudinal fins (61b-63b) with free distal parts (610b-630b),
- the first (60a) and second (60b) sets of longitudinal fins (61a-63a; 61b-63b) are defined by a plurality of longitudinal slits (F1-F6) extending over only part of the length of the fixing piece (6) and starting alternately from the first end (6a) and from the second end (6b), said slits (F1-F6) all extending along a same intermediate axial portion (600) of the fixing piece (6).

11. Set (1) according to any one of Claims 1 to 10, **characterized in that** the first end (6a) of the fixing piece (6) is received in the radial seat (9) irreversibly, preferably with a snap-fit action.

12. Set (1) according to any one of Claims 1 to 10, **characterized in that** the first end (6a) of the fixing piece (6) is received in the radial seat (9) reversibly, preferably with a snap-fit action.

13. Set (1) according to Claim 12, **characterized in that** the first end (6a) of the fixing piece (6) and the internally threaded insert (5) are configured such that, when the internally threaded insert (5) is bearing axially against the first end (6a) of the fixing piece (6), this bearing opposes a withdrawal of the first end (6a) of the fixing piece (6) from the radial seat (9).

14. Set (1) according to either of Claims 12 and 13, **characterized in that** a relative movement in translation of the internally threaded insert (5) toward the distal end (2b) of the dental implant (2) along the first longitudinal axis (I-I) causes a radial expansion of the first end (6a) of the fixing piece (6) .

15. Set (1) according to any one of Claims 1 to 14, **characterized in that** the dental prosthesis core (10) comprises a proximal end (10a) configured to bear directly against the distal end (2b) of the dental implant (2).

16. Set (1) according to any one of Claims 1 to 15, **characterized in that** it has means (27) for rotational indexing of the dental prosthesis core (10) and of the dental implant (2) about the first longitudinal axis (I-I).

17. Set (1) according to any one of Claims 1 to 16, **characterized in that** the dental prosthesis core (10) has an outer form substantially in the shape of a tooth, obtained preferably by machining of a ceramic block or produced by sintering of a ceramic powder.

18. Set (1) according to any one of Claims 1 to 17, **characterized in that** the dental prosthesis core (10) is a ceramic block which has a substantially cylindrical or prismatic outer shape and which is intended to be machined so as to obtain an outer form substantially in the shape of a tooth.
